# EUROPEAN PATENT APPLICATION

(11) **EP 2 527 557 A1**
(43) Date of publication of application: **28.11.2012**
(21) Application number: 11734561.1
(22) Date of filing: 12.01.2011
(51) Int. Cl.: E04D 13/18, H01L 31/042

(54) **PHOTOELECTRIC CONVERSION DEVICE**

(30) Priority: 22.01.2010 JP 2010012042
(71) Applicant: Sanyo Electric Co., Ltd., Osaka 570-8677 (JP)
(72) Inventor: OGASAHARA Satoru, Moriguchi-shi Osaka 570-8677 (JP); YAGIURA Toshio, Moriguchi-shi Osaka 570-8677 (JP)
(74) Representative: Calderbank, Thomas Roger
(86) International application number: PCT/JP2011/050343
(87) International publication number: WO 2011/089954

(57) **Abstract**

Water is appropriately discharged, resulting in the reliability of a photoelectric conversion device being increased. Said photoelectric conversion device is equipped with a U-shaped panel frame section (10) comprising a frame front surface section (10a), a frame side surface section (10c), and a frame back surface section (10b) which are provided in such a way as to enclose the front surface, the side surface, and the back surface, respectively, of the end side peripheral region of a photoelectric conversion panel (300). The frame front surface section (10a) is equipped with cutout regions (18) extending from an end of the U-shaped portion to the frame side surface section (10c). The frame back surface section (10b) is provided with back surface holes (18a) which are drilled through the frame back surface section (lOb).

## Description

### CROSS-REFERENCE TO RELATED APPLICATION

The present application is a continuation application of International Application No. PCT/2011/050343, filed January 12, 2011, the entire contents of which are incorporated herein by reference and priority to which is hereby claimed. The PCT/2011/050343 application claimed the benefit of the date of the earlier filed Japanese Patent Application No. 2010-12042 filed January 22, 2010, the entire contents of which are incorporated herein by reference, and priority to which is hereby claimed.

### Technical Field

The present invention relates to a photoelectric conversion device.

### Background Art

As a power generation system which uses solar light, there is used a photoelectric conversion panel in which thin films of amorphous or microcrystalline semiconductors are layered. When such a photoelectric conversion panel is applied to a solar light power generation system, a module frame member is mounted on the photoelectric conversion panel on its outer periphery section, and the photoelectric conversion panel is installed.

In such a solar light power generation system, there is a possibility that, due to rain or the like, water accumulates on a light-receiving surface or a back surface of the photoelectric conversion panel or at a contact section between the photoelectric conversion panel and the module frame member. When such water evaporates, dust would remain as a water mark, which may cause reduction of power generation efficiency of the photoelectric conversion panel. In addition, the water accumulated in the module frame member may degrade insulation of the photoelectric conversion panel or may accelerate corrosion.

In order to solve such a problem, there have been proposed techniques in which a cutout having an opening is formed on a light-receiving surface side of the module frame portion of the solar cell module, so that drainage from the light-receiving surface is improved (Patent Literature 1 and Patent Literature 2). In addition, there is also proposed a structure in which there is formed a cutout which extends from an inner periphery side toward an outer periphery side of the module frame member as viewed from the light-receiving surface side of the photoelectric conversion module and which ends at an outer side surface of the module frame member, wherein an aperture section having a minimum opening width at an inner periphery side in relation to the end of the cutout is formed in the cutout (Patent Literature 3).

### [Related Art References]

### [Patent Literature]

[Patent Literature 1] JP 2002-94100 A
[Patent Literature 2] JU H6-17257 A
[Patent Literature 3] International Publication No. WO 2006/098473 A1

### Disclosure of Invention

### [Technical Problem]

In addition, in the solar light power generation system, in many cases, the solar cell module is placed in an inclined posture. Therefore, even when the cutout is formed at a lower part of the module frame member as in the related art, the water is not sufficiently discharged, which results in reduction of the power generation efficiency of the solar cell module.

### [Solution to Problem]

According to one aspect of the present invention, there is provided a photoelectric conversion device comprising a photoelectric conversion panel, and a module frame which supports the photoelectric conversion panel, wherein the module frame comprises a U-shaped panel frame section having a frame front surface section, a frame side surface section, and a frame back surface section provided to surround a front surface, a side surface, and a back surface, respectively, of an end side region of the photoelectric conversion panel, a cutout region is formed in the frame front surface section from an end of the U-shape to the frame side surface section, and a back surface hole penetrating through the frame back surface section is formed in the frame back surface section.

### [Advantageous Effects of the Invention]

According to various aspects of the present invention, reliability of the photoelectric conversion device can be improved.

### Brief Description of Drawings

FIG. 1 is a front view of an outer appearance showing a structure of a photoelectric conversion device according to a preferred embodiment of the present invention.
FIG. 2 is a back view of an outer appearance showing a structure of a photoelectric conversion device according to a preferred embodiment of the present invention.
FIG. 3 is a plan view showing a structure of a module frame according to a preferred embodiment of the present invention.
FIG. 4 is a side view showing a structure of a module frame according to a preferred embodiment of the present invention.
FIG. 5 is a cross sectional diagram showing a structure of a module frame according to a preferred embodiment of the present invention.
FIG. 6 is a front view of an outer appearance showing a structure of an elastic member according to a preferred embodiment of the present invention.
FIG. 7 is a cross sectional diagram showing a structure of an elastic member according to a preferred embodiment of the present invention.
FIG. 8 is a cross sectional diagram for explaining mounting of an elastic member to a module frame according to a preferred embodiment of the present invention.
FIG. 9 is an enlarged cross sectional diagram for explaining mounting of an elastic member to a module frame according to a preferred embodiment of the present invention.
FIG. 10 is a cross sectional diagram for explaining mounting of an elastic member and a photoelectric conversion panel to a module frame according to a preferred embodiment of the present invention.
FIG. 11 is a perspective view for explaining an operation of a photoelectric conversion device according to a preferred embodiment of the present invention.
FIG. 12 is a perspective view for explaining an operation of a photoelectric conversion device according to a preferred embodiment of the present invention.
FIG. 13 is a plan view showing an alternative configuration of a structure of a module frame according to a preferred embodiment of the present invention.
FIG. 14 is a side view showing an alternative configuration of a structure of a module frame according to a preferred embodiment of the present invention.

### Best Mode for Carrying Out the Invention

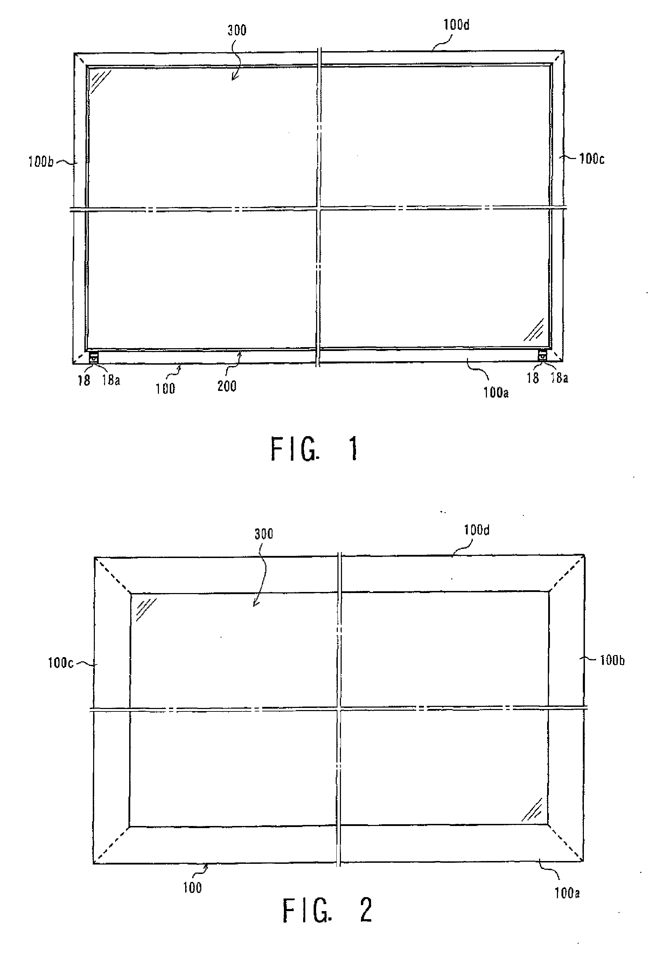

As shown in a front view of an outer appearance of FIG. 1 and a back view of outer appearance of FIG. 2, a photoelectric conversion device according to a preferred embodiment of the present invention comprises a module frame 100, an elastic member 200, and a photoelectric conversion panel 300. The module frame 100 is formed such that a light-receiving surface, a side surface, and a back surface of four sides of the outer periphery of the photoelectric conversion panel 300 are fitted with the elastic member 200 therebetween.

The photoelectric conversion panel 300 has a structure similar to that of a typical solar cell panel, and is formed by layering, over a substrate, a transparent electrode, a photoelectric conversion unit, a backside electrode, and a sealing member. For the substrate, a transparent material such as glass and a resin is used. The transparent electrode is formed over the substrate, and, for the transparent electrode, there is preferably used a film containing one or a plurality of transparent conductive oxides (TCO) in which tin oxide (SnO₂), zinc oxide (ZnO), indium tin oxide (ITO), or the like is doped with tin (Sn), antimony (Sb), fluorine (F), aluminum (Al), or the like. In particular, zinc oxide (ZnO) is preferable by virtue of its high light transmittance, low resistivity, and high plasma-resisting characteristic. The photoelectric conversion unit is formed over the transparent electrode. The photoelectric conversion unit is, for example, an amorphous silicon photoelectric conversion unit (a-Si unit), a microcrystalline silicon photoelectric conversion unit (µc-Si unit), or the like. Alternatively, the photoelectric conversion unit may have a structure in which a plurality of photoelectric conversion units are layered, such as a tandem-type structure or a triple-type structure. The backside electrode is formed over the photoelectric conversion unit, and preferably has a layered structure of a transparent conductive oxide (TCO) and a reflective metal. As the transparent conductive oxide (TCO), tin oxide (SnO₂), zinc oxide (ZnO), indium tin oxide (ITO), or the like is used. As the reflective metal, a metal such as silver (Ag), aluminum (Al), or the like is used. The layered structure is sealed by the sealing member. For example, the backside electrode is covered with a filler and a back sheet. The sealing member is preferably made of a resin material such as EVA or polyimide.

The photoelectric conversion panel 300 is not limited to such a structure, and any structure may be employed so long as the module frame 100 and the elastic member 200 to be described below can be applied.

As shown in FIGs. 1 and 2, the module frame 100 comprises module frame members 100a - 100d. The module frame members 100a - 100d are combined to form the four sides of the module frame 100. The module frame members 100a - 100d are formed in lengths necessary to support four sides of the photoelectric conversion panel 300. Because the module frame members 100a - 100d have similar structures, in the following, the module frame member 100a is exemplified. However, when it is described that the structure is unique to the module frame member 100a, such a structure is not applicable to other members.

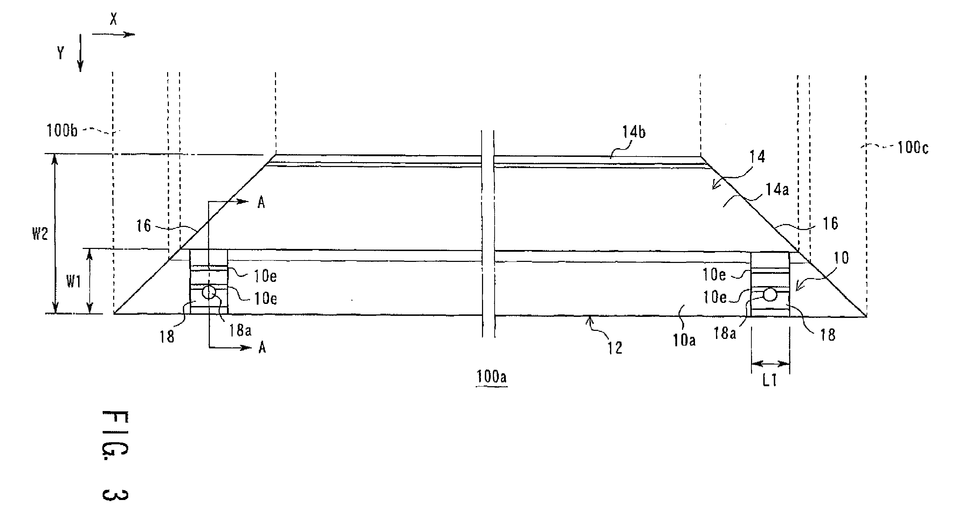

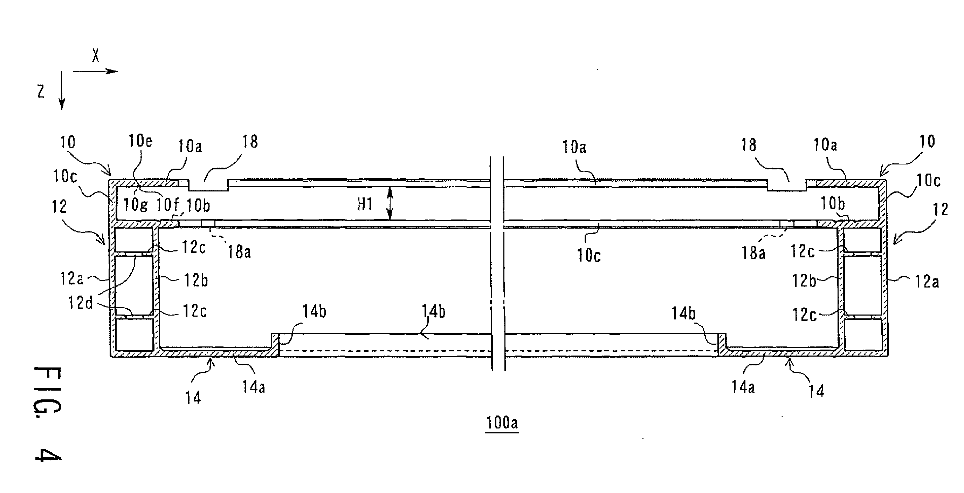

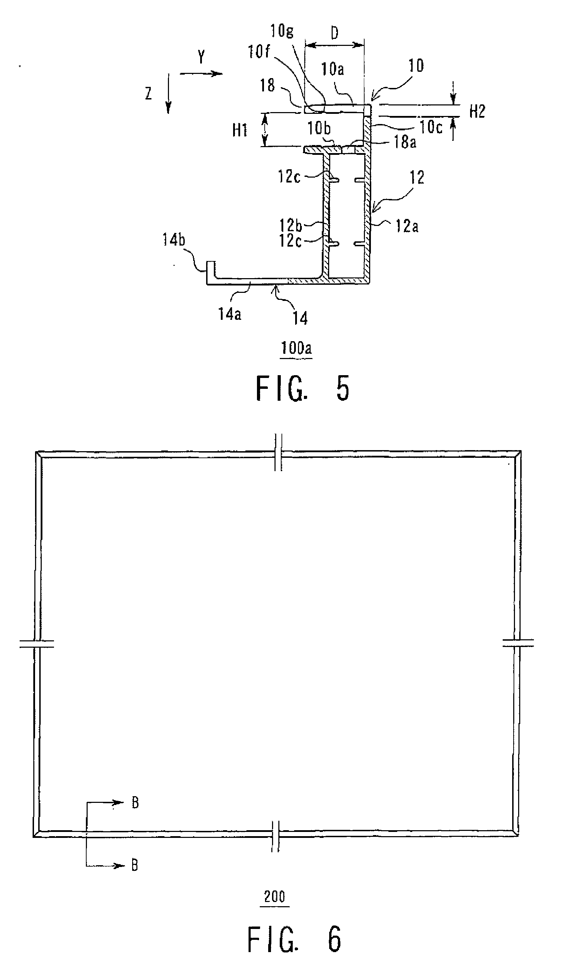

FIGs. 3, 4, and 5 are a front view, a side view, and a cross sectional view of the module frame member 100a. FIG. 3 is a front view viewing the module frame member 100a from a Z direction of FIG. 4. FIG. 4 is a side view viewing the module frame member 100a from a Y direction of FIG. 3. In FIG. 4, a hatching is applied to clearly show an end surface of the module frame member 100a. FIG. 5 is a cross sectional diagram along a line A-A in FIG. 3.

As shown in FIGs. 3, 4, and 5, the module frame member 100a is formed by combining a panel frame section 10, a support section 12, and a bottom surface section 14. The module frame member 100a is formed with a material having a mechanical strength sufficient to support the photoelectric conversion panel 300 in the installed state. The module frame member 100a is preferably formed, for example, from a metal material such as aluminum, light-gauge steel frame, or the like, or a synthetic material such as a carbon resin.

The panel frame section 10 is a section, in the module frame member 100a, forming a frame to which the elastic member 200 and the photoelectric conversion panel 300 are inserted. As shown in FIGs. 4 and 5, the panel frame section 10 comprises a frame front surface section 10a, a frame back surface section 10b, and a frame side surface section 10c. The frame front surface section 10a, the frame back surface section 10b, and the frame side surface section 10c are combined in a U shape, and have a structure in which the frame front surface section 10a and the frame back surface section 10b are connected by the frame side surface section 10c. The frame front surface section 10a and the frame back surface section 10b are plate-shaped members, and, as shown in the plan view of FIG. 3, the frame front surface section 10a and the frame back surface section 10b have a width W1 necessary for mechanically supporting the photoelectric conversion panel 300. In addition, the frame front surface section 10a and the frame back surface section 10b are placed to be parallel with a panel surface when the photoelectric conversion panel 300 is placed along a length direction X of the module frame member 100a. As shown in FIG. 5, a distance H1 between the frame front surface section 10a and the frame back surface section 10b is set to a size to allow the elastic member 200 and the photoelectric conversion panel 300 to be fitted on the panel frame section 10 without being loosened. The frame side surface section 10c connects the frame front surface section 10a and the frame back surface section 10b at the outer periphery portion of the panel frame section 10. As shown in FIG. 4, the panel frame section 10 is placed such that, when the module frame 100 is formed, an inner surface of the U shape formed by the frame front surface section 10a, the frame back surface section 10b, and the frame side surface section 10c faces the inner side of the module frame 100.

In addition, as shown in FIGs. 3 and 4, a groove 10e is formed on the frame front surface section 10a and the frame back surface section 10b, to be fitted with a protrusion 24 of the elastic member 200 to be described later. The groove 10e is formed in a line shape on the inner surfaces of the frame front surface section 10a and the frame back surface section 10b placed to oppose each other, and along the length direction X of the module frame member 100a. In the present embodiment, two grooves 10e are formed on each of the frame front surface section 10a and the frame back surface section 10b, in an opposing manner.

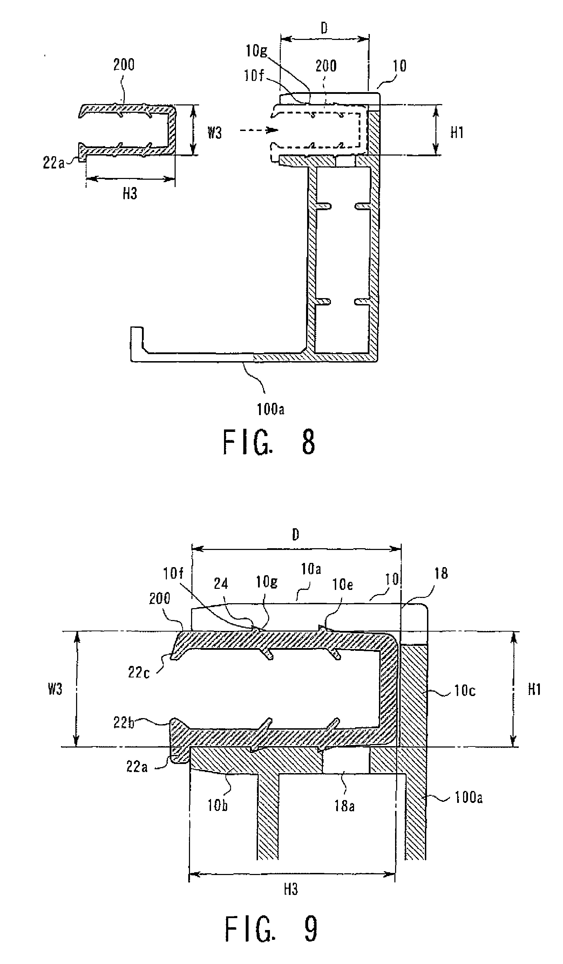

The grooves 10e may be provided in any shape, size, position, or number which allows fitting of the protrusion 24 of the elastic member 200. For example, as will be described later with reference to FIG. 9, each groove 10e is preferably machined such that an inclination 10f on the side of a U-shaped opening of the panel frame section 10 is larger than an inclination 10g at an opposite side of the opening. With such a configuration, the protrusion 24 of the elastic member 200 can be easily fitted when the elastic member 200 is mounted to the panel frame section 10, and the elastic member 200 is not easily detached from the panel frame section 10 once the elastic member 200 is mounted.

As shown in FIGs. 4 and 5, the support section 12 is a member which connects the panel frame section 10 and the bottom surface section 14 in the module frame member 100a. The support section 12 supports the photoelectric conversion panel 300 inserted into the panel frame section 10. The support section 12 comprises an outer side surface section 12a, an inner side surface section 12b, and a separation member 12c. The outer side surface section 12a and the inner side surface section 12b are plate-shaped members, and connect the frame back surface section 10b of the panel frame section 10 and the bottom surface section 14 along the length direction X of the module frame member 100a. The outer side surface section 12a and the inner side surface section 12b are placed such that, when the module frame 100 is formed, the outer side surface section 12a serves as an outer frame positioned on an outer peripheral section of the module frame 100 and the inner side surface section 12b serves as an inner frame positioned at an inner position in relation to the outer side surface section 12a. The separation member 12c is provided between the outer side surface section 12a and the inner side surface section 12b, and increases the mechanical strength by forming a hollow structure for the support section 12.

As shown in FIGs. 4 and 5, a dividing opening 12d which divides the separation member 12c at an intermediate portion in a line shape is preferably formed in the separation member 12c. The dividing opening 12d may simply be a through hole which penetrates through the separation member 12c. With such a configuration, water entering the hollow section of the support section 12 can be discharged to the outside of the module frame 100 through the dividing opening 12d and gaps or the like of the connection section of the module frame members 100a - 100d.

As shown in FIGs. 4 and 5, the bottom surface section 14 is a section which forms a base for fixing the photoelectric conversion device in an installation location. The bottom surface section 14 comprises a flat plate section 14a. As shown in FIG. 3, the flat plate section 14a has a width W2, and is placed to be parallel to the panel surface when the photoelectric conversion panel 300 is placed along the length direction X of the module frame member 100a. With this configuration, when the photoelectric conversion device is fixed at the installation location, the photoelectric conversion panel 300 and the bottom surface section 14 can be installed such that an inclination of the panel surface of the photoelectric conversion panel 300 fitted to the U-shaped portion of the panel frame section 10 and an inclination of the bottom surface section 14 coincide with each other. In addition, as shown in FIG. 3, the width W2 of the flat plate section 14a is preferably set wider than the width W of the frame front surface section 10a and the frame back surface section 10b of the panel frame section 10. With this configuration, the module frame 100 can be mounted in a mechanically stable manner.

Alternatively, as shown in FIGs. 4 and 5, a raised section 14b in which an edge of the bottom surface section 14 is raised along the length direction X of the module frame member 100a may be provided. With the provision of the risen section 14b, it is possible to improve the mechanical strength of the bottom surface section 14.

As shown in FIG. 3, each of ends of the module frame members 100a - 100d are machined to an end surface 16 (shown with hatching in FIG. 4) which is cut at 45° with respect to the length direction X and the width direction Y of the module frame member 100a. The end surfaces 16 of the module frame members 100a - 100d are connected opposing each other, to form the rectangular module frame 100. The connection of the members is achieved by, for example, inserting L-shaped members into a hollow structure surrounded by the outer side surface section 12a, the inner side surface section 12b, and the separation member 12c.

Next, a structure unique to the module frame member 100a will be described. As shown in FIGs. 3, 4, and 5, a cutout region 18 is provided near both ends in the length direction X. As shown in FIGs. 3 and 5, the cutout region 18 is a region where a part of the frame front surface section 10a and the frame side surface section 10c is cut out for a length L1 along the length direction X. The length L1 of the cutout region 18 is preferably set greater than or equal to 5 mm and less than or equal to 20 mm. In addition, a height H2 of the cutout region 18 is preferably set larger than a thickness of the frame front surface section 10a so that a part of the frame side surface section 10c is also cut out. For example, when the thickness of the frame front surface section 10a is greater than or equal to 1 mm and less than or equal to 5 mm, the height H2 of the cutout region 18 is preferably set larger than the thickness of the frame front surface section 10a in a range of greater than or equal to 1.5 mm and less than or equal to 10 mm.

In the present embodiment, the cutout region 18 has a rectangular shape as viewed from the front, but the present invention is not limited to such a configuration. For example, the cutout region 18 may have a trapezoid shape as viewed from the front or may have a shape of a combination of a plurality of rectangles.

In addition, as shown in FIGs. 3, 4, and 5, a back surface hole 18a is formed in the frame back surface section 10b matching the position of the cutout region 18. As shown in FIG. 3, the back surface hole 18a is preferably formed at a position overlapping the cutout region 18 as viewed from the front. By forming the back surface hole 18a at a position overlapping the cutout region 18, it is possible to open the back surface hole 18a from the opening of the cutout region 18, and to improve workability of the module frame member 100a. In addition, the back surface hole 18a is preferably formed so that at least a part of the back surface hole 18a overlaps the groove 10e.

In the present embodiment, the back surface hole 18a has a circular cross section as viewed from the front, but the present invention is not limited to such a configuration. For example, the back surface hole 18a may have a cross section of a rectangular or triangular shape. In addition, in the case of the circular shape the size of the back surface hole 18a is preferably set to greater than or equal to 2 mm and less than or equal to the length L1.

Next, the elastic member 200 will be described. As shown in a plan view of FIG. 6, the elastic member 200 has a rectangular outer appearance mounted within the panel frame section 10 of the module frame 100. The elastic member 200 is preferably formed from a material having a lower modulus of elasticity than the material of the module frame 100 and the material of the substrate of the photoelectric conversion panel 300. For example, when the module frame 100 is made of aluminum (having a modulus of elasticity of 7.03 x 10¹⁰ Pa) and the substrate of the photoelectric conversion panel 300 is made of glass (having a modulus of elasticity of 7.16 x 10¹⁰ Pa), it is preferable to use an olefin-based thermoplastic elastomer. More specifically, it is preferable to use a material which includes at least one of synthesized (isoprene) rubber, styrene rubber, butadiene rubber, urethane rubber, fluororubber, butyl rubber, and silicone rubber.

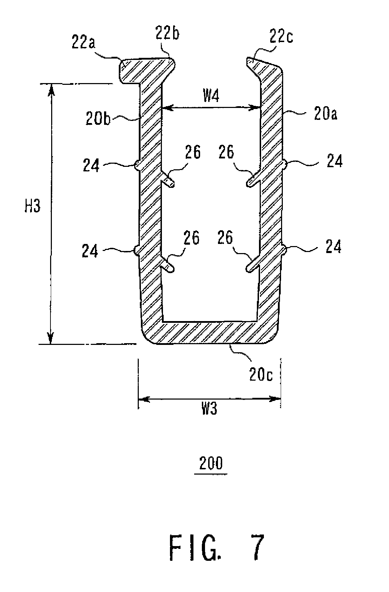

FIG. 7 is a diagram showing a cross sectional structure of the elastic member 200 along a line B-B of FIG. 6. The elastic member 200 comprises, as basic members, an elastic member front surface section 20a, an elastic member back surface section 20b, and an elastic member side surface section 20c. The elastic member front surface section 20a and the elastic member back surface section 20b are placed opposing each other, and the elastic member front surface section 20a and the elastic member back surface section 20b are connected in a U shape by the elastic member side surface section 20c. In the elastic member 200, a through hole or a slit may be formed in at least a part of the elastic member front surface section 20a, the elastic member back surface section 20b, and the elastic member side surface section 20c. With this configuration, even when water enters a gap between the photoelectric conversion panel 300 and the elastic member 200, the water can be easily discharged to the outside.

As will be described later with reference to FIG. 9, a height H3 of the elastic member front surface section 20a and the elastic member back surface section 20b is set to be equal to or less than a depth D of the U shape of the panel frame section 10. As shown in FIG. 7, on an end of the elastic member back surface section 20b, a protrusion 22a protruding toward an outer side and a protrusion 22b protruding toward an inner side are provided. In addition, on an end of the elastic member front surface section 20a, a protrusion 22c protruding toward the inner side is provided. Meanwhile, on the end of the elastic member front surface section 20a, no protrusion protruding toward the outer side is provided. The protrusion 22a is preferably provided to protrude in an approximate perpendicular direction with respect to the end of the elastic member back surface section 20b. The protrusion 22b and the protrusion 22c are preferably provided to gradually incline from a deeper part of the U shape of the elastic member 200 toward the outside.

As will be described later with reference to FIG. 9, an outer width W3 of the elastic member 200 is set slightly smaller than the height H1 of the panel frame section 10. As shown in FIG. 7, the line-shaped protrusion 24 is formed on an outer wall surface of the elastic member front surface section 20a and the elastic member back surface section 20b, along a length direction of the elastic member 200. The protrusion 24 is provided in a shape, size, position, and number to be fitted with the groove 10e formed on the inner wall of the panel frame section 10 when the elastic member 200 is mounted on the panel frame section 10. In the present embodiment, two protrusions 24 having semicircular cross sections are provided on each of the outer wall surfaces of the elastic member front surface section 20a and the elastic member back surface section 20b.

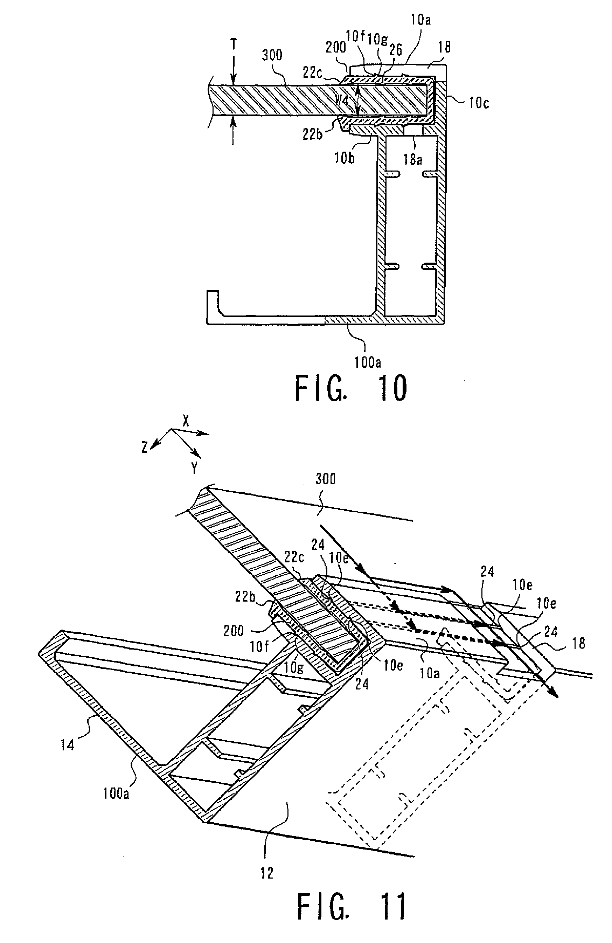

As will be described later with reference to FIG. 10, a width W4 of the inside of the U shape of the elastic member 200 is set slightly larger than a thickness T of the photoelectric conversion panel 300. In addition, as shown in FIG. 7, protrusions 26 are formed on inner wall surfaces of the elastic member front surface section 20a and the elastic member back surface section 20b, along the length direction of the elastic member 200. The shape, size, position, and number of the protrusions 26 may be suitably changed, and, in the present embodiment, two crease-shaped protrusions 26 protruding from the side of the opening of the U shape of the elastic member 200 toward the deeper part are provided on each of the inner wall surfaces of the elastic member front surface section 20a and the elastic member back surface section 20b.

The photoelectric conversion device is formed by mounting the elastic member 200 and the photoelectric conversion panel 300 on the module frame 100. FIGs. 8 and 9 show an example mounting of the elastic member 200 to the module frame member 100a. The elastic member 200 can be inserted into the other module frame members 100b - 100d in a similar manner.

FIGs. 8 and 9 show cross sections along a line A-A of the module frame member 100a shown in FIG. 3. FIG. 9 is a diagram enlarging and showing a portion of the panel frame section 10 in the cross sectional diagram of FIG. 8.

As shown in FIGs. 8 and 9, the elastic member 200 is inserted to the panel frame section 10 of the module frame 100. Because an outer width W3 of the elastic member 200 is set slightly smaller than the height H1 of the panel frame section 10, the elastic member 200 is fitted to the U-shaped portion of the panel frame section 10 by its elastic force. In addition, because the height H3 of the elastic member 200 is set to be equal to or smaller than the depth D of the U shape of the panel frame section 10, the elastic member 200 can be completely inserted to the panel frame section 10 by inserting the elastic member 200 until the protrusion 22a provided at the end contacts the panel frame section 10.

Moreover, as shown in FIG. 9, the line-shaped protrusions 24 provided on the outer wall surfaces of the elastic member front surface section 20a and the elastic member back surface section 20b of the elastic member 200 engage the grooves 10e formed on the inner wall of the panel frame section 10. With this configuration, the elastic member 200 can be inserted so that the elastic member 200 is not easily detached from the panel frame section 10. Here, because the inclination 10f on the side of the entrance of the U shape is machined to be larger than the inclination 10g on the deeper part in the groove 10e, the protrusion 24 can be easily inserted along the inclination 10g and toward the deeper part of the U shape when the elastic member 200 is inserted into the panel frame section 10, and the protrusion 24 is not easily detached from the groove 10e once the protrusion 24 is inserted.

FIG. 10 shows an example of the elastic member 200 and the photoelectric conversion panel 300 mounted to the module frame member 100a. FIG. 10 shows a cross section along a line A-A of the module frame member 100a shown in FIG. 3. The elastic member 200 and the photoelectric conversion panel 300 can be inserted for the other module frame members 100b - 100d in a similar manner.

As shown in FIG. 10, the photoelectric conversion panel 300 is fitted to the module frame member 100a in a state where the elastic member 200 is mounted. Because the width W4 of the inner side of the U shape of the elastic member 200 is slightly larger than the thickness T of the photoelectric conversion panel 300, the photoelectric conversion panel 300 is fitted to the U-shaped portion of the elastic member 200 by the elastic force of the elastic member 200.

Because the crease-shaped protrusion 26 protruding from the side of the U-shaped opening of the elastic member 200 toward the deeper part is provided, when the photoelectric conversion panel 300 is inserted into the elastic member 200, the protrusion 26 is tilted in the insertion direction and can be easily inserted toward the deeper part of the U shape, and, once the photoelectric conversion panel 300 is inserted, the photoelectric conversion panel 300 is not easily detached, due to the elastic force of the protrusion 26 and the frictional force on the surface.

In addition, because the protrusion 22b and the protrusion 22c which are gradually inclined from the deeper part of the U shape toward the outer side are provided on the ends of the elastic member 200, the inserted photoelectric conversion panel 300 is subjected to a force to push toward the deeper part of the U shape by the elastic forces of the protrusion 22b and the protrusion 22c. With this configuration, it is possible to make it more difficult for the photoelectric conversion panel 300 to be detached from the elastic member 200.

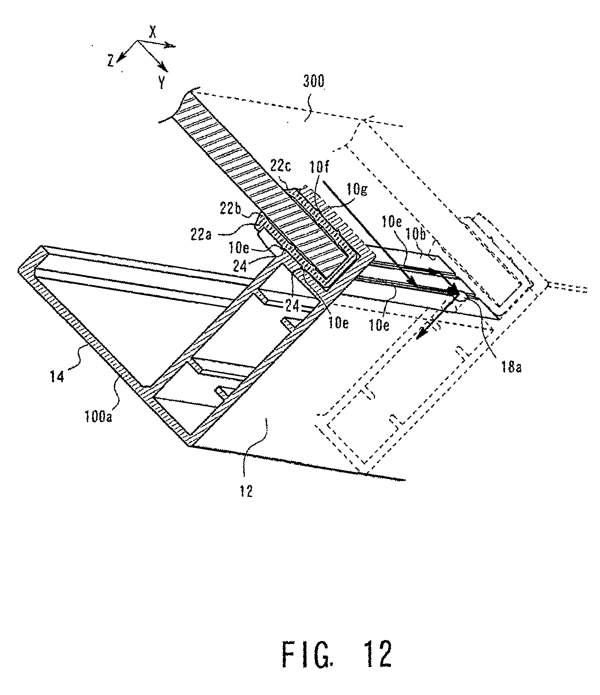

Next, with reference to partial cross sectional perspective views of FIGs. 11 and 12, an operation of the photoelectric conversion device in the present embodiment will be described. In FIG. 11, in order to clarify an explanation for a case where water adheres to the side of the light receiving surface (front surface) of the photoelectric conversion panel 300, a part of the groove 10e of the frame front surface section 10a and the module frame 100 is shown with a broken line. In addition, in FIG. 12, in order to clarify an explanation for a case where water adheres to the back surface side of the photoelectric conversion panel 300, FIG. 12 is shown as an inside opened-up view to clearly show the groove 10e of the frame back surface section 10b of the module frame 100.

The photoelectric conversion device is installed in an inclined manner, with the module frame member 100a at the lower side. When water adheres to the photoelectric conversion panel 300 due to rain or the like in such an installation state, as shown by a wide solid line arrow of FIG. 11, the water flowing along the surface of the photoelectric conversion panel 300 along the inclination of the installation accumulates at the end of the panel frame section 10 of the module frame member 100a, is transferred and flows along the length direction X of the module frame member 100a due to the slight inclination of the module frame 100, reaches one of the cutout regions 18 provided on the ends, and is discharged to the outside of the module frame member 100a through the cutout region 18.

Here, because no protrusion protruding toward the outer side is provided on the end of the elastic member front surface section 20a of the elastic member 200, the water flowing along the end of the panel frame section 10 of the module frame member 100a can flow into the cutout region 18 without being blocked by a protrusion. Therefore, the water which has flowed along the end of the panel frame section 10 can be quickly and reliably discharged to the outside of the module frame 100. As can be understood, it is sufficient that the protrusion protruding toward the outer side is not provided at least in a part of the region of the end of the elastic member front surface section 20a; in particular, in a region overlapping the cutout region 18.

Even if water enters from the gap between the elastic member 200 and the module frame member 100a to the inside of the U shape of the panel frame section 10, as shown by the wide broken line arrow of FIG. 11, the water is stopped at the groove 10e of the frame front surface section 10a to which the protrusion 24 is fitted, reaches one of the cutout regions 18 along the groove 10e of the frame front surface section 10a, and is discharged to the outside of the module frame member 100a through the cutout region 18. In this manner, the water entering the gap between the elastic member 200 and the frame front surface section 10a can be quickly and reliably discharged to the outside of the module frame 100.

On the other hand, when water adheres to the back surface of the photoelectric conversion panel 300, as shown by a narrow broken line arrow of FIG. 11, the water flows down along the back surface of the photoelectric conversion panel 300 along the inclination of installation. Because the protrusion 22a protruding toward the outer side is not provided on the end of the elastic member back surface section 20b, the water flows along the edge of the protrusion 22a of the elastic member 200 and down to the bottom surface section 14. In addition, because of the protrusion 22a, water tends to not enter the gap between the elastic member 200 and the frame back surface section 10b of the module frame member 100a.

In addition, even when water enters from the gap between the elastic member 200 and the frame back surface section 10b to the inside of the U shape of the panel frame section 10, as shown by a wide solid line arrow of FIG. 12, the water is stopped at the channel 10e of the frame back surface section 10b to which the protrusion 24 is fitted; reaches, along the groove 10e of the frame back surface section 10b, the back surface hole 18a formed in the cutout region 18; and flows into the hollow structure of the support section 12 of the module frame member 100a through the back surface hole 18a. Then, the water reaches the end of the module frame member 100a through the hollow structure, and is discharged to the outside through the gap of a connection section between the module frame member 100a and the module frame member 100b or 100c.

As described, according to the photoelectric conversion device of the present embodiment, even when the photoelectric conversion panel 300 is exposed to rain or the like, the water can be quickly and reliably discharged to the outside of the device. Therefore, the degradation of the photoelectric conversion panel 300 can be inhibited, and the reliability of the photoelectric conversion device can be improved.

In the present embodiment, the cutout region 18 and the back surface hole 18a are formed on both ends of the module frame member 100a, but it is sufficient that at least one of each of the cutout region 18 and the back surface hole 18a is provided. By forming the cutout region 18 and the back surface hole 18a on both ends of the module frame member 100a, there is an advantage that the water can be reliably discharged from one of the ends according to the inclination of the photoelectric conversion device.

In addition, in the present embodiment, the cutout region 18 and the back surface hole 18a are formed only on the module frame member 100a, but alternatively, the cutout region 18 and the back surface hole 18a may be provided similarly on the other module frame members 100b - 100d. When the cutout region 18 and the back surface hole 18a are provided only on the module frame member 100a, it is preferable to install the device such that the module frame member 100a is positioned at a lower side, as in the present embodiment, in order to reliably discharge water. In addition, when the module frame 100 has a rectangular shape, the device may be installed with either the long side or the short side positioned at the lower side. In this case, however, it is preferable to provide the cutout region 18 and the back surface hole 18a at least on the module frame member positioned at the lower side.

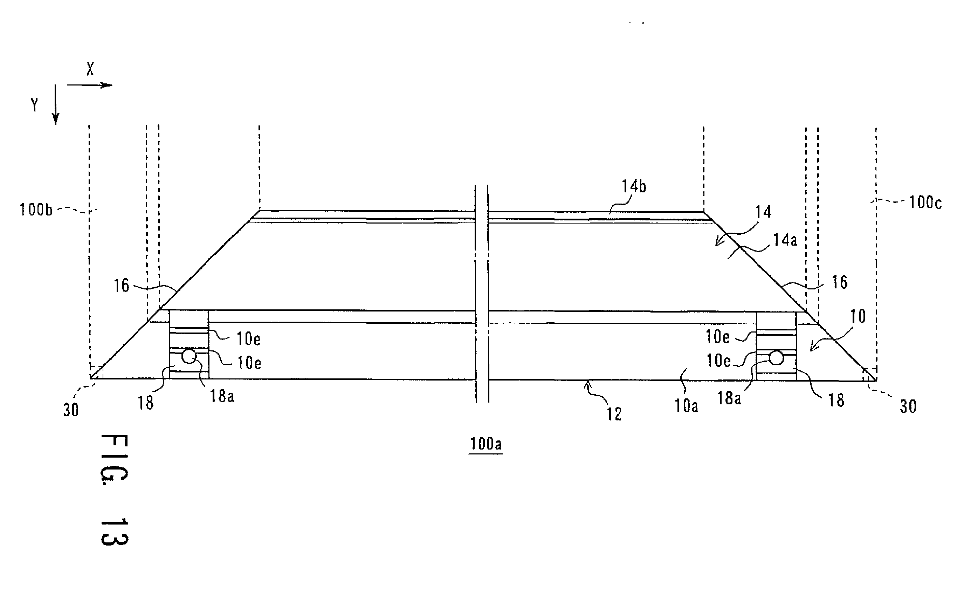

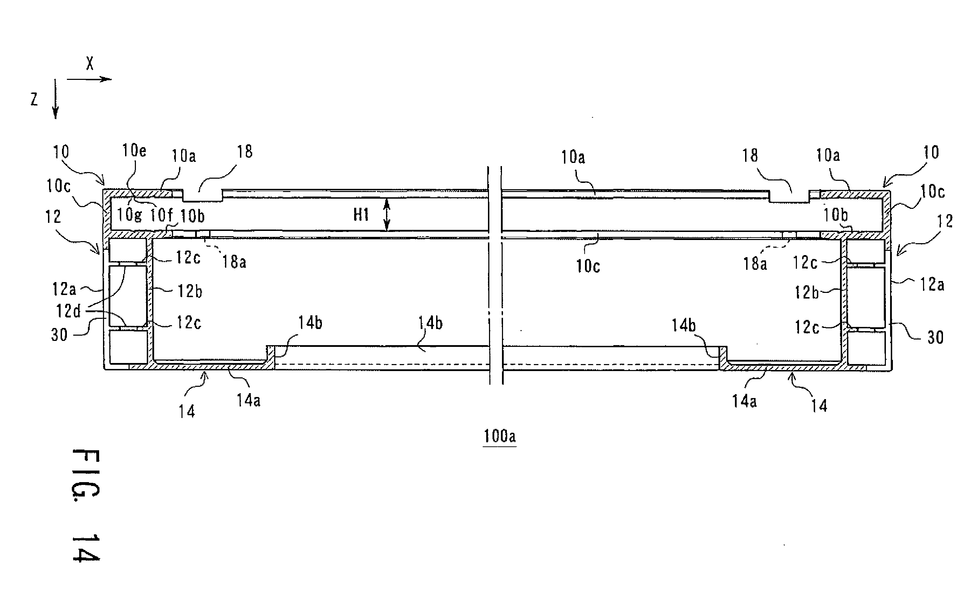

Alternatively, as shown in a plan view of FIG. 13 and a cross sectional view of FIG. 14, at least a part of an outer side surface section 12a forming a corner of the support section 12 of the module frame member 100a may preferably be cut out to provide an end cutout region 30. Similarly, the end cutout region 30 may be provided as necessary on the module frames 100b - 100d, rather than on the module frame member 100a. With the end cutout region 30 provided, as described above, the water flowing from the back surface of the photoelectric conversion panel 300 into the hollow structure of the support section 12 of the module frame member 100a can be quickly and reliably discharged to the outside through the end cutout region 30.

### [Explanation of Reference Numerals]

10 PANEL FRAME SECTION; 10a FRAME FRONT SURFACE SECTION; 10b FRAME BACK SURFACE SECTION; 10c FRAME SIDE SURFACE SECTION; 10e GROOVE; 10f INCLINATION; 10g INCLINATION; 12 SUPPORT SECTION; 12a OUTER SIDE SURFACE SECTION; 12b INNER SIDE SURFACE SECTION; 12c SEPARATION MEMBER; 12d DIVIDING OPENING; 14 BOTTOM SURFACE SECTION; 14a FLAT PLATE SECTION; 14b RISEN SECTION; 16 END SURFACE; 18 CUTOUT REGION; 18a BACK SURFACE HOLE; 20a ELASTIC MEMBER FRONT SURFACE SECTION; 20b ELASTIC MEMBER BACK SURFACE SECTION; 20c ELASTIC MEMBER SIDE SURFACE SECTION; 22a PROTRUSION; 22b PROTRUSION; 22c PROTRUSION; 24 PROTRUSION; 26 PROTRUSION; 30 END CUTOUT REGION; 100 MODULE FRAME; 100a - 100d MODULE FRAME MEMBER; 200 ELASTIC MEMBER; 300 PHOTOELECTRIC CONVERSION PANEL

## Claims

1. A photoelectric conversion device comprising:
a photoelectric conversion panel; and
a module frame which supports the photoelectric conversion panel, wherein
the module frame comprises a U-shaped panel frame section having a frame front surface section, a frame side surface section, and a frame back surface section provided to surround a front surface, a side surface, and a back surface, respectively, of an end side region of the photoelectric conversion panel,
a cutout region is formed in the frame front surface section from an end of the U shape to the frame side surface section, and
a back surface hole penetrating through the frame back surface section is formed in the frame back surface section.

2. The photoelectric conversion device according to Claim 1, wherein
the cutout region and the back surface hole are formed in a module frame member, among module frame members forming the module frame, which supports a lower side of the photoelectric conversion panel.

3. The photoelectric conversion device according to Claim 1 or 2, wherein
the back surface hole is formed in a position overlapping the cutout region viewed form a side of the frame front surface section.

4. The photoelectric conversion device according to any one of Claims 1 - 3, wherein
an end cutout region connecting the back surface hole and an outside of the module frame is formed at a corner of the module frame.

5. The photoelectric conversion device according to any one of Claims 1 - 4, wherein
the frame back surface section comprises a groove formed in a line shape along a direction of a side of the photoelectric conversion panel, and
the back surface hole is formed at a position overlapping at least a part of the line-shaped groove.
